# EUROPÄISCHE PATENTANMELDUNG

(11) **EP 1 127 670 A2**
(43) Veröffentlichungstag der Anmeldung: **29.08.2001**
(21) Anmeldenummer: 01103704.1
(22) Anmeldetag: 15.02.2001
(51) Int. Cl.: B29C 44/12

(54) **Vorrichtung zum Herstellen von Fahrzeuginnenteilen aus Schaumkunststoff**

(30) Priorität: 23.02.2000 DE 10008359
(71) Anmelder: Heidel GmbH & Co. KG, Werkzeug- u. Maschinenfabrikation, 41751 Viersen (Boisheim) (DE)
(72) Erfinder: Dr. Dipl.-Ing. Norbert Hoogen, 47533 Kleve (DE); Dipl.-Ing. Frank Rosen, 41479 Viersen (DE); Dieter Lencer, 41844 Wegberg (DE)
(74) Vertreter: von Raffay, Vincenz, Dipl.-Ing.

(57) **Zusammenfassung**

Die Vorrichtung zum Herstellen von Fahrzeuginnenteilen aus Mehrkomponentenkunststoff, insbesondere Polyurethan, besteht aus einem Träger (4) und einer Dekorfolie (9), die durch den Mehrkomponentenkunststoff (10) hinterschäumt und miteinander verklebt sind. Die Vorrichtung weist ein unteres und ein oberes Formwerkzeug (1,2) und einen Rahmen (6) auf. Eine Dichtschnur sorgt für die Abdichtung des Formhohlraumes. Um einen unerwünschten Austritt des Mehrkomponentenkunststoffes beim Aufschäumen zu verhindern, dieses würde eine Nachbearbeitung und eine Reinigung erfordern, liegt die Dichtschnur (7) an den drei Seiten, die nicht dem Formhohlraum zugekehrt sind, bei geschlossener Form an dem Spannrahmen (7) und dem unteren und oberen Formwerkzeug (1,2) an. Hier ist die Dichtschnur in ihrer Lage und Form fixiert. Die dem Formhohlraum zugekehrte vierte Seite ist in Richtung des Formhohlraumes ausdehnbar, um sich hier der Kontur des Trägers und der Folie anzupassen und so für die gewünschte Dichtung zu sorgen. Die Dichtschnur ist in vorteilhafter Weise an dem Spannrahmen befestigt und mit diesem auf und ab bewegbar.

## Beschreibung

Die Erfindung betrifft eine Vorrichtung nach dem Oberbegriff des Anspruches 1.

Derartige Vorrichtungen sind in den unterschiedlichsten Ausgestaltungen bekannt. Sie werden eingesetzt, um die komplizierten Innenverkleidungen in Automobilen herzustellen. Diese Innenverkleidungen weisen eine Dekorfolie aus Stoff, Leder oder dgl. auf, d.h. sie sind mit dieser Dekorfolie kaschiert. Diese Dekorfolie ist im eingebauten Zustand später dem Innenraum des Automobils zugekehrt. Die Kaschierung findet durch den Mehrkomponentenkunststoff statt, der beim Herstellen aufschäumt und so für einen sogenannten "Soft-Touch" sorgt. Beim Herstellen dieser Innenverkleidung wird ein Träger, normalerweise ebenfalls aus Kunststoff, in die Form eingelegt, um für die nötige Steifigkeit und Stabilität zu sorgen. Dieser Träger ist bei dem fertigen und eingebauten Produkt normalerweise nicht sichtbar.

Bei der Herstellung eines derartigen Fahrzeuginnenteiles treten Probleme beim Aufschäumen des Mehrkomponentenkunststoffes im Bereich der Abdichtung durch die Dichtschnur zwischen Unter- und Oberform auf. Hier tritt der stark klebrige Mehrkomponentenkunststoff aus, so daß er später vom Produktteil entfernt werden muß. Ohne Säuberung der Produktteile sind die Folgeprozesse (Umbugen, Kleben etc.) nicht durchführbar. Dieser Austritt führt auch zu einer Verunreinigung des Formwerkzeuges. Der Spannrahmen hält die Dekorfolie auf dem unteren Formwerkzeug fest. Zusätzlich wird die Dekorfolie normalerweise durch Vakuum angesaugt und gehalten.

Der Erfindung liegt nun die Aufgabe zugrunde, für eine bessere Abdichtung zwischen den beiden Formwerkzeugen zu sorgen und insbesondere im wesentlichen einen Austritt von Mehrkomponentenkunststoff beim Aufschäumen zu verhindern.

Diese Aufgabe wird durch das Kennzeichen des Anspruches 1 gelöst.

Erfindungsgemäß wird eine besondere Dichtschnur verwendet, die so befestigt und angeordnet wird, daß sie auf den drei Seiten, die nicht dem Formhohlraum zugekehrt sind, in ihrer Lage und Form fixiert ist, d.h. hier keinen Freiheitsgrad für eine Bewegung aufweist. Bewegen kann sie sich nur in Richtung auf den Formhohlraum. Beim Schließen der Form sorgt diese Bewegung in Richtung auf den Formhohlraum und den dort befindlichen Träger und die Dekorfolie für eine entsprechende Anpassung an diese Teile und somit für die gewünschte Abdichtung.

In vorteilhafter Weise ist die Erfindung so ausgestaltet wie in Anspruch 2 angegeben. Hier ist die Dichtschnur an dem Spannrahmen befestigt. Wenn die Dekorfolie in das Unterwerkzeug eingelegt ist, wird der Spannrahmen mit der Dichtschnur auf das untere Formwerkzeug bewegt. Hierdurch wird die Dekorfolie gehalten und es erfolgt bereits eine Fixierung an zwei Seiten der Dichtschnur. Nun wird das obere Formwerkzeug mit dem Träger auf das untere Formwerkzeug bewegt, nachdem der Mehrkomponentenkunststoff in dem Formhohlraum eingegeben wurde. Während der Schließbewegung des Formwerkzeuges berührt der Träger nicht die Dichtschnur. Der Kontakt zwischen Träger und Dichtschnur kommt ausschließlich durch die Deformation der Dichtschnur durch das Oberwerkzeug zustande. Hierbei erfolgt die Fixierung an der dritten, dem oberen Formwerkzeug zugekehrten Seite der Dichtschnur. Die vierte Seite, die sich ausdehnen kann, sorgt dann für die gewünschte Abdichtung gegen den Formhohlraum und die befindlichen Abschnitte des Trägers und der Dekorfolie.

Im folgenden wird die Erfindung unter Hinweis auf die Zeichnung anhand eines Ausführungsbeispieles näher erläutert.

Es zeigt:
- Fig. 1: einen Teilschnitt durch ein Formwerkzeug nach der Erfindung im geöffneten Zustand; und
- Fig. 2: einen der Fig. 1 entsprechenden Schnitt, jedoch mit dem Formwerkzeug in geschlossenem Zustand.

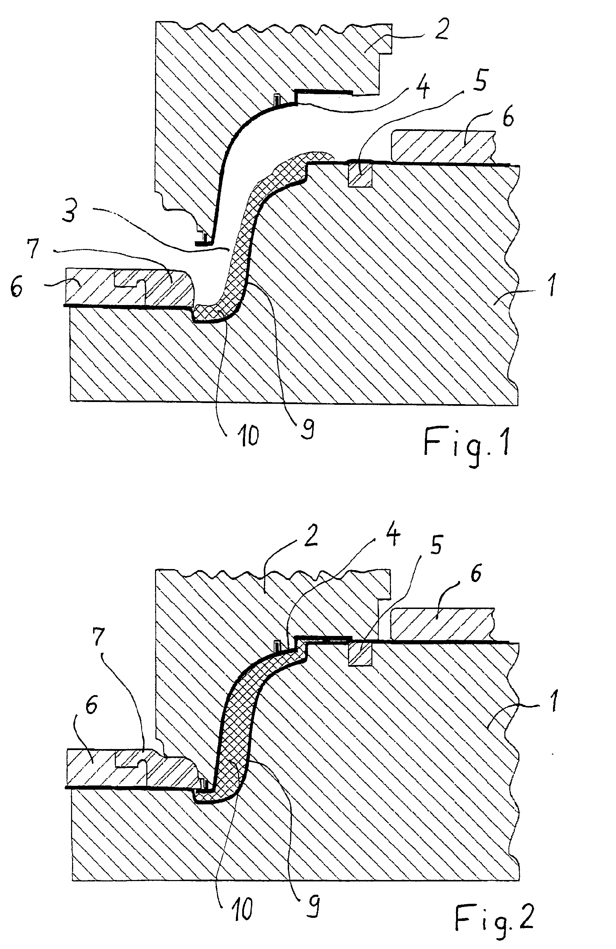

Das in den Fig. 1 und 2 dargestellte Formwerkzeug besteht aus einem unteren Formwerkzeug 1 und einem oberen Formwerkzeug 2. Das obere Formwerkzeug nimmt den Träger 4 auf, der in unterschiedlicher Weise entweder mechanisch oder durch Ansaugen mit Hilfe von Vakuum befestigt wird. In das untere Formwerkzeug 1 wird die Dekorfolie 9 eingelegt und mit Hilfe des Spannrahmens 6, der von oben auf das untere Formwerkzeug 1 bewegt wird, fixiert und gehalten. Zusätzlich wird die Dekorfolie 9 durch Anlegen von Vakuum in die richtige Position gebracht und gehalten. Der Formhohlraum zwischen den beiden Formwerkzeugen 1 und 2 ist mit 3 bezeichnet.

Wenn sich sämtliche Teile in der in Fig. 1 gezeigten Position befinden, wird der Mehrkomponentenkunststoff mit Hilfe eines Manipulators in den Formhohlraum eingebracht. Dann wird das obere Formwerkzeug 2 nach unten bewegt und die Form geschlossen. Der Mehrkomponentenkunststoff 10 schäumt dann auf.

Beim Betrachten der Fig. 2 wird deutlich, daß die Dichtschnur 7, die mit Hilfe einer Halterung an dem Spannrahmen 6 befestigt ist, an drei Seiten fest eingespannt ist. Sie wird durch das obere Formwerkzeug 2 etwas zusammengedrückt, so daß sie sich lediglich an der vierten Seite, die dem Formhohlraum 3 zugekehrt ist, ausdehnen kann, um für eine gute Abdichtung im Bereich der dort befindlichen Abschnitte des Trägers und der Dekorfolie zu sorgen.

Wenn der Schaumprozeß beendet ist, wird die Form geöffnet und das fertige Fahrzeuginnenteil kann entnommen werden. Ein Austritt von Schaum im Bereich der Dichtschnur 7 findet praktisch nicht statt, so daß auch keine oder nur eine geringe Nachbearbeitung erforderlich ist.

Je nach dem, wie das herzustellende Fahrzeuginnenteil aussieht, wird die Form gestaltet. Bei der hier gezeigten Ausführungsform ist die Dichtschnur 7 nur an einer Seite vorgesehen. An der anderen Seite befindet sich eine herkömmliche Dichtung 5, die aber durch die überstehende Dekorfolie 9 geschützt ist. Bei dieser Art der Herstellung kann hier von Haus aus kein Mehrkomponentenkunststoff austreten. Es sind aber auch andere Ausführungsformen denkbar, bei denen die Dichtschnur 7 die gesamte Form umläuft.

## Patentansprüche

1. Vorrichtung zum Herstellen von Fahrzeuginnenteilen aus Mehrkomponentenkunststoff, insbesondere Polyurethan, bestehend aus einem Träger (4) und einer Dekorfolie (9), die durch den Mehrkomponentenkunststoff (10) hinterschäumt und miteinander verklebt sind, mit einem unteren und einem oberen Formwerkzeug (1,2) und einem Rahmen (6) für die Dekorfolie, wobei der Formhohlraum (3) durch eine Dichtschnur (7) abgedichtet ist, dadurch gekennzeichnet, daß die Dichtschnur (7) an den drei Seiten, die nicht dem Formhohlraum (3) zugekehrt sind, bei geschlossener Form an dem Rahmen (6) und dem unteren und oberen Formwerkzeug (1,2) anliegen und in ihrer Form und Lage fixiert ist, und daß die dem Formhohlraum zugekehrte vierte Seite der Dichtschnur in Richtung auf den Formhohlraum ausdehnbar ist.

2. Vorrichtung nach Anspruch 1, dadurch gekennzeichnet, daß die Dichtschnur (7) an dem Spannrahmen (6) befestigt und mit diesem bewegbar ist und bei geschlossenem Formwerkzeug (1,2) mit ihrer unteren Seite an dem unteren Formwerkzeug (1) und mit ihrer oberen Seite an dem oberen Formwerkzeug (2) anliegt.
